# DEMANDE DE BREVET EUROPEEN

(11) **EP 4 631 792 A1**
(43) Date de publication de la demande: **15.10.2025**
(21) Numéro de dépôt: 25166243.3
(22) Date de dépôt: 26.03.2025
(51) Int. Cl.: B60R 9/10, B61B 12/00

(54) **DISPOSITIF DE SUPPORT POUR CYCLE A DEUX ROUES**

(30) Priorité: 08.04.2024 FR 2403605
(71) Demandeur: MONT'ID, 73800 Sainte Helene du Lac (FR)
(72) Inventeur: LAGIER, Yves, 74370 ARGONAY (FR)
(74) Mandataire: Cabinet Poncet

(57) **Abrégé**

Dispositif de support (1) recevant et maintenant un cycle à deux roues sur un véhicule de remontée mécanique déplacé selon une direction longitudinale (I-I), ledit dispositif de support (1) comportant :
- un support inférieur (5) à réceptacle intermédiaire (6) recevant en appui une roue dudit cycle, allongé entre des tronçons d'extrémité proximale (5a) et distale (5b), et articulé selon son tronçon d'extrémité proximale (5a) à pivotement entre :
• une position de transport, dans laquelle le support inférieur (5) forme un premier angle (A1) avec la direction longitudinale (I-I),
• une position de chargement, dans laquelle le support inférieur (5) forme un deuxième angle inférieur au premier angle (A1),

- des moyens de roulement (7), agencés sur le tronçon d'extrémité distale (5b) du support inférieur (5), et conformés pour rouler sur une surface telle que le sol (S).

## Description

### DOMAINE TECHNIQUE DE L'INVENTION

La présente invention concerne le domaine du transport de cycles, et concerne plus particulièrement un dispositif de support pour recevoir et maintenir un cycle à deux roues à l'arrière et/ou sur le côté d'un véhicule de remontée mécanique.

On connaît du document WO 2011/101785 A1 un dispositif de support pour recevoir et maintenir un cycle à deux roues à l'arrière d'un véhicule de remontée mécanique destiné à être déplacé selon une direction longitudinale, ledit dispositif de support comprenant un support conformé pour recevoir et retenir une première roue (roue avant) dudit cycle à deux roues orientée dans un plan de maintien sensiblement vertical et contenant ladite direction longitudinale.

Un tel dispositif de support ne doit pas être installé trop haut sur le véhicule de remontée mécanique afin de permettre audit véhicule de remontée mécanique d'osciller d'avant en arrière (par exemple sous l'effet du vent) selon une amplitude angulaire d'environ 40 degrés (20 degrés vers l'avant et 20 degrés vers l'arrière) sans que le dispositif de support vienne heurter le câble ou une partie d'un pylône de la remontée mécanique. Il en résulte que la disposition en hauteur du dispositif de support sur le véhicule de remontée mécanique est souvent basse et occasionne fréquemment un contact de la deuxième roue (roue arrière) sur le sol en gare de départ et/ou d'arrivée.

Lorsque le véhicule de remontée mécanique parvient en gare d'arrivée, il arrive parfois qu'il subisse un léger mouvement de recul. Un premier inconvénient est que ce mouvement de recul peut occasionner des contraintes (de torsion notamment) sur la deuxième roue, pouvant aller jusqu'à voiler celle-ci.

Le trajet du véhicule de remontée mécanique en gare de départ ou d'arrivée comporte une portion sensiblement semi-circulaire permettant au véhicule de remontée mécanique de repartir en sens inverse. Lors de tout ou partie de ce trajet semi-circulaire du véhicule de remontée mécanique, la deuxième roue (roue arrière) vient généralement au contact du sol mais ne roule pas parfaitement sur le sol : la roue est en effet entraînée en dérapant latéralement sur le sol sur une partie au moins de son trajet sur le sol. Ce mouvement de dérapage latéral a tendance à orienter le cycle de façon oblique par rapport au plan de maintien. Un deuxième inconvénient est que se produisent alors des contraintes (notamment en torsion) sur la première roue (roue avant) par l'intermédiaire du support, contraintes qui peuvent voiler la première roue et gênent l'extraction de la première roue hors du support (et donc le déchargement du cycle).

Le document FR 2 958 255 A1 décrit un dispositif de support selon le préambule de la revendication 1, comprenant :
- un support supérieur conformé pour recevoir et retenir une première roue dudit cycle à deux roues,
- un support inférieur à réceptacle intermédiaire conformé pour recevoir en appui une deuxième roue dudit cycle à deux roues.

Un tel dispositif de support ne doit pas heurter le sol en gare de départ ou d'arrivée, et est en conséquence installé très haut sur le véhicule de remontée mécanique. Le véhicule de remontée mécanique ne peut alors pas osciller d'avant en arrière (par exemple sous l'effet du vent) selon une amplitude angulaire satisfaisante (environ 20 degrés vers l'avant et environ 20 degrés vers l'arrière) sans que le dispositif de support vienne heurter le câble ou une partie d'un pylône de la remontée mécanique.

### EXPOSE DE L'INVENTION

Les termes « avant », « arrière », « antérieur » et « postérieur » utilisés ci-après servent à définir la position relative d'un élément par rapport à un autre en fonction d'un sens de déplacement, par exemple le sens déplacement d'un véhicule de remontée mécanique ou d'un vélo pendant leur utilisation normale.

Les termes « haut », « bas », « supérieur » et « inférieur » utilisés ci-après servent à définir la position relative d'un élément par rapport à un autre en fonction de leur altitude prise selon une direction verticale définie par la gravité terrestre.

Un problème proposé par la présente invention est de limiter les risques que le cycle (notamment ses roues) soit endommagé par son contact avec le sol en gare de départ et/ou d'arrivée.

Un autre problème proposé par l'invention est de faciliter le chargement et le déchargement du cycle en gare de départ et d'arrivée.

Un autre problème proposé par l'invention est de permettre une oscillation du véhicule de remontée mécanique d'avant en arrière (par exemple sous l'effet du vent) selon une amplitude angulaire satisfaisante (environ 20 degrés vers l'avant et environ 20 degrés vers l'arrière) sans que le dispositif de support vienne heurter le câble ou une partie d'un pylône de la remontée mécanique.

Pour atteindre ces objets ainsi que d'autres, l'invention propose un dispositif de support pour recevoir et maintenir un cycle à deux roues à l'arrière et/ou sur le côté d'un véhicule de remontée mécanique destiné à être déplacé selon une direction longitudinale, ledit dispositif de support comprenant un support supérieur conformé pour recevoir et retenir une première roue dudit cycle à deux roues orientée dans un plan de maintien sensiblement vertical et contenant ladite direction longitudinale, ledit dispositif de support comportant :
- un support inférieur, allongé entre un tronçon d'extrémité proximale et un tronçon d'extrémité distale,
- un réceptacle intermédiaire, agencé sur ledit support inférieur entre le tronçon d'extrémité proximale et le tronçon d'extrémité distale, et conformé pour recevoir en appui une deuxième roue dudit cycle à deux roues ;
selon l'invention :
- le support inférieur est articulé selon son tronçon d'extrémité proximale à pivotement dans ledit plan de maintien entre :
   a. une position de transport, dans laquelle le support inférieur (5) forme un premier angle (A1) avec la direction longitudinale (I-I),
   b. une position de chargement, dans laquelle le support inférieur (5) forme un deuxième angle (A2) avec la direction longitudinale (I-I), le deuxième angle (A2) étant inférieur au premier angle (A1),
- des moyens de roulement (7) sont agencés sur le tronçon d'extrémité distale (5b) du support inférieur (5), et sont conformés pour rouler sur une surface telle que le sol (S).

La deuxième roue du cycle est supportée en permanence par le support inférieur, et ne vient ainsi pas au contact du sol. En gare de départ ou d'arrivée, le support inférieur peut pivoter en entrant en contact avec le sol, et reste au contact du sol par l'intermédiaire des moyens de roulement, lesquels permettent un roulement sur le sol ne contraignant pas le cycle.

De préférence, pour une structure simple et robuste, le support inférieur peut être articulé selon son tronçon d'extrémité proximale au support supérieur.

Avantageusement, des premiers moyens de butée s'opposent à la rotation du support inférieur vers le bas au-delà d'une orientation oblique limite prédéterminée dans laquelle la deuxième roue est en arrière de la première roue dans le sens de déplacement du véhicule de remontée mécanique. Une telle orientation oblique limite permet de conserver la deuxième roue en appui dans le réceptacle intermédiaire sous le simple effet de la gravité. Une telle orientation oblique permet aussi de limiter les risques de conflit avec le garde-corps du véhicule de remontée mécanique lorsque ce dernier est de type siège.

De préférence, les moyens de roulement peuvent être conformés pour rouler dans toutes directions sur un plan. Les contraintes latérales sur le dispositif de support et ses éléments constitutifs sont ainsi très limitées, voire nulles, même dans un déplacement en virage.

Pour ce faire, les moyens de roulement peuvent avantageusement comporter une roulette portée par une monture librement pivotante autour d'un axe de pivotement. Une telle roulette est parfois appelée « roulette folle ». En alternative, les moyens de roulement peuvent comporter une ou plusieurs billes porteuses.

Pour un meilleur maintien du cycle à deux roues, on peut avantageusement prévoir que le réceptacle intermédiaire est conformé pour maintenir ladite deuxième roue sensiblement dans ledit plan de maintien.

Pour mieux recevoir et maintenir la deuxième roue, le réceptacle intermédiaire peut de préférence présenter une section transversale, par rapport audit plan de maintien, sensiblement en forme de U ou de vé.

Avantageusement, le support supérieur peut comporter un élément inférieur de maintien destiné à recevoir en appui vertical ladite première roue. Le cycle peut ainsi reposer dans le support supérieur par le seul effet de la gravité.

De préférence, on peut prévoir que :
- le support supérieur comporte un élément supérieur de maintien destiné à venir en appui vertical sur ladite première roue,
- l'élément supérieur de maintien est articulé à pivotement dans ledit plan de maintien par rapport à l'élément inférieur de maintien, entre :
   a. au moins une position d'ouverture, dans laquelle la première roue peut pénétrer entre l'élément supérieur de maintien et l'élément inférieur de maintien par un mouvement d'introduction effectué vers l'avant dans ledit plan de maintien,
   b. au moins une position de fermeture, dans laquelle l'élément supérieur de maintien et l'élément inférieur de maintien s'opposent à une extraction de la première roue par un mouvement d'extraction effectué vers l'arrière dans ledit plan de maintien.

La coopération des éléments supérieur et inférieur de maintien permet de fiabiliser la retenue de la roue dans le support supérieur.

Avantageusement, des premiers moyens de rappel élastiques, disposés entre l'élément supérieur de maintien et l'élément inférieur de maintien, peuvent rappeler en permanence l'élément supérieur de maintien et l'élément inférieur de maintien vers leur position de fermeture. Les premiers moyens de rappel élastiques permettent d'exercer une force suffisamment élevée pour limiter les risques que la première roue échappe accidentellement hors du support supérieur en gare de départ et d'arrivée, mais suffisamment faible pour permettre à un opérateur d'engager la première roue sans trop de peine dans le support supérieur en gare de départ et d'arrivée.

De préférence, on peut prévoir que :
- l'élément supérieur de maintien est relié au support inférieur par des deuxièmes moyens de rappel élastiques,
- un pivotement du support inférieur vers sa position de transport provoque un allongement des deuxièmes moyens de rappel élastiques quelle que soit la position de l'élément supérieur de maintien.

Les deuxièmes moyens de rappel élastiques permettent d'augmenter fortement la retenue de la première roue dans le support supérieur lorsque le véhicule de remontée mécanique n'est pas en gare de départ ou d'arrivée, c'est-à-dire lorsque le support inférieur est en position de transport : on limite ainsi efficacement les risques de chute du cycle, même en cas de vent important. Par contre, lorsque le véhicule de remontée mécanique est en gare de départ, le support inférieur est pivoté en position de chargement par l'appui des moyens de roulement sur le sol, de sorte que les deuxièmes moyens de rappel élastiques sont détendus et ne gênent pas l'introduction de la première roue dans le support supérieur. Lorsque le véhicule de remontée mécanique est en gare d'arrivée, le support inférieur est pivoté en position de chargement par l'appui des moyens de roulement sur le sol, de sorte que les deuxièmes moyens de rappel élastiques sont détendus et ne gênent pas l'extraction de la première roue hors du support supérieur.

Avantageusement, les premiers moyens de rappel élastiques et/ou les deuxièmes moyens de rappel élastiques peuvent comportent un ressort ou un sandow. De tels moyens de rappel élastiques sont à la fois simples, économiques et robustes.

En alternative, on peut prévoir que :
- les premiers moyens de rappel élastiques et/ou deuxièmes moyens de rappel élastiques comportent une tige de connexion comportant un corps dont la longueur peut varier entre une première longueur et une deuxième longueur, la deuxième longueur étant supérieure à la première longueur,
- le corps de la tige de connexion comporte un premier tronçon de corps et un deuxième tronçon de corps agencés de façon télescopique,
- un ressort exerce en permanence un effort tendant à ramener le corps de la tige de connexion à sa première longueur.

De préférence, le dispositif de support peut comporter des deuxièmes moyens de butée s'opposant à un pivotement de l'élément supérieur de maintien vers l'élément inférieur de maintien au-delà d'une position prédéterminée d'attente. La position d'attente est choisie de façon à procurer un écart entre l'élément supérieur de maintien et l'élément inférieur de maintien qui est suffisamment grand pour engager facilement la première roue du cycle, et qui est suffisamment petit pour assurer une retenue satisfaisante des premières roues de cycles ayant un diamètre relativement petit.

Avantageusement, on peut prévoir que :
- l'élément supérieur de maintien comporte deux bras latéraux espacés l'un à l'écart de l'autre de part et d'autre dudit plan de maintien de façon à recevoir entre eux une partie de la première roue, lesdits bras latéraux comportant chacun une extrémité libre,
- les extrémités libres des bras latéraux sont reliées entre elles par des moyens de liaison destinés à venir en appui vertical sur la première roue.

Les bras latéraux participent à une orientation et un maintien de la première roue dans le plan de maintien, tout en permettant aux moyens de liaison de venir en appui vertical sur la première roue de façon à améliorer sa retenue dans le support supérieur.

De préférence, les moyens de liaison peuvent comporter un rouleau disposé à pivotement autour d'un axe transversal sensiblement perpendiculaire audit plan de maintien. Le pivotement du rouleau permet de faciliter l'introduction de la première roue dans le support supérieur, entre l'élément supérieur de maintien et l'élément inférieur de maintien.

Avantageusement, le dispositif de support peut comporter des moyens de solidarisation conformés pour fixer le dispositif de support derrière un véhicule de remontée mécanique se développant en largeur selon une direction transversale, ledit véhicule de remontée mécanique étant destiné à être déplacé selon la direction longitudinale.

Le dispositif de support peut ainsi aisément être rapporté et fixé sur un véhicule de remontée mécanique, en particulier sur un véhicule de remontée mécanique existant.

Selon un autre aspect de la présente invention, il est proposé un véhicule de remontée mécanique se développant en largeur selon une direction transversale et destiné à être déplacé selon une direction longitudinale, comportant un dispositif de support tel que décrit précédemment, ledit dispositif de support étant fixé derrière le véhicule de remontée mécanique.

En alternative, le dispositif de support tel que précédemment décrit peut être fixé sur le côté d'un véhicule de remontée mécanique.

Selon encore un autre aspect de la présente invention, il est proposé une remontée mécanique comportant au moins un véhicule de remontée mécanique tel que décrit précédemment, ledit véhicule de remontée mécanique étant de type siège ou cabine.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue de côté, selon un premier sens, d'un dispositif de support selon un mode de réalisation particulier de l'invention, avec un support inférieur disposé dans une position de transport ;
[Fig.2] La figure 2 est une vue en perspective du dispositif de support de la figure 1 ;
[Fig.3] La figure 3 est une vue de côté, selon un deuxième sens opposé au premier sens, du dispositif de support de la figure 1 ;
[Fig.4] La figure 4 est une vue de côté, selon le premier sens, du dispositif de support de la figure 1, avec le support inférieur disposé dans une position de chargement ;
[Fig.5] La figure 5 est une vue en perspective du dispositif de support de la figure 4 ;
[Fig.6] La figure 6 est une vue schématique en coupe partielle d'un exemple de moyens de rappel élastiques utilisables dans le cadre de la présente invention ;
[Fig.7] La figure 7 est une vue de côté d'un véhicule de remontée mécanique portant un dispositif de support de la figure 1, avec un cycle à une première étape de chargement ;
[Fig.8] La figure 8 est une vue de côté du véhicule de remontée mécanique de la figure 7, avec le cycle à une deuxième étape de chargement ;
[Fig.9] La figure 9 est une vue de côté du véhicule de remontée mécanique de la figure 7, avec le cycle à une troisième étape de chargement ;
[Fig.10] La figure 10 est une vue de côté du véhicule de remontée mécanique de la figure 7, avec le dispositif de support pourvu du cycle et avec le support inférieur disposé en position de transport ;
[Fig.11] La figure 11 est une vue en perspective d'un véhicule de remontée mécanique portant deux dispositifs de support de la figure 1 dont l'un contient un cycle, ledit véhicule de remontée mécanique se trouvant en gare de départ ou d'arrivée de la remontée mécanique ; et
[Fig.12] La figure 12 est une vue en perspective du véhicule de remontée mécanique de la figure 11, ledit véhicule de remontée mécanique se trouvant entre les gares de départ et d'arrivée de la remontée mécanique.

### DESCRIPTION DES MODES DE REALISATION PREFERES

Lorsque des références numériques identiques sont utilisées dans plusieurs figures, modes de réalisation ou variantes de l'invention, ces références numériques désignent des éléments identiques ou similaires dans chacun(e) des figures, modes de réalisation ou variantes.

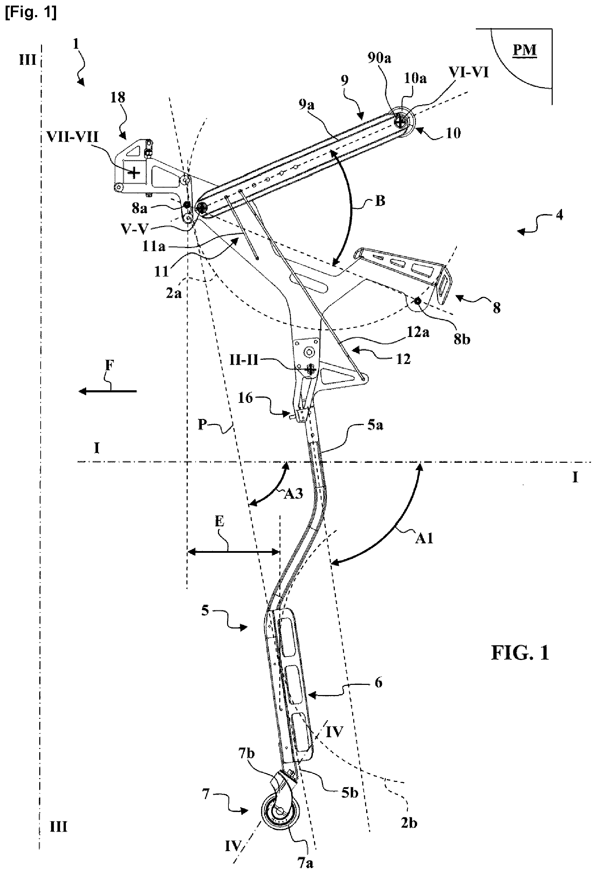

Sur les figures 1 à 5 est illustré un dispositif de support 1 selon un mode de réalisation particulier de l'invention.

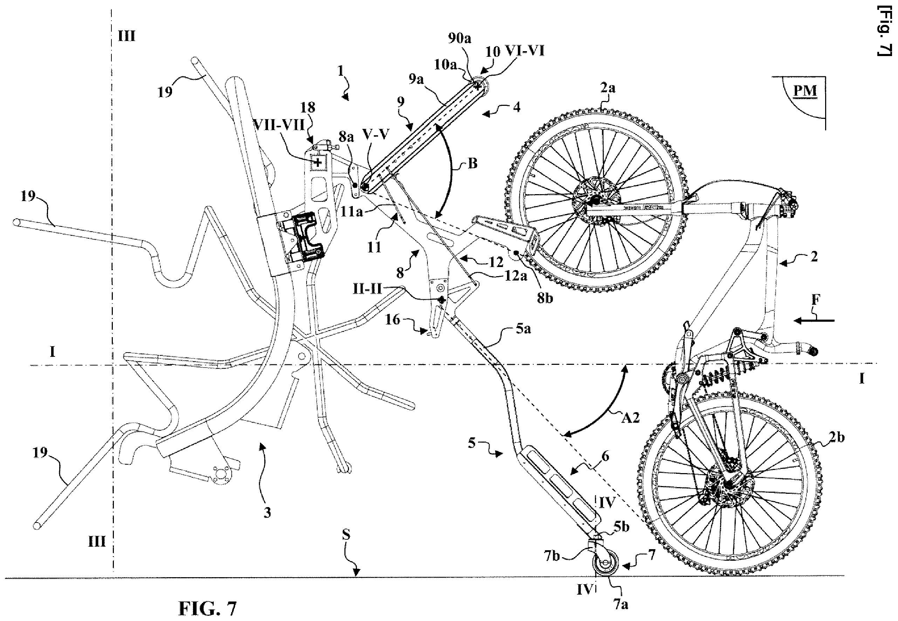

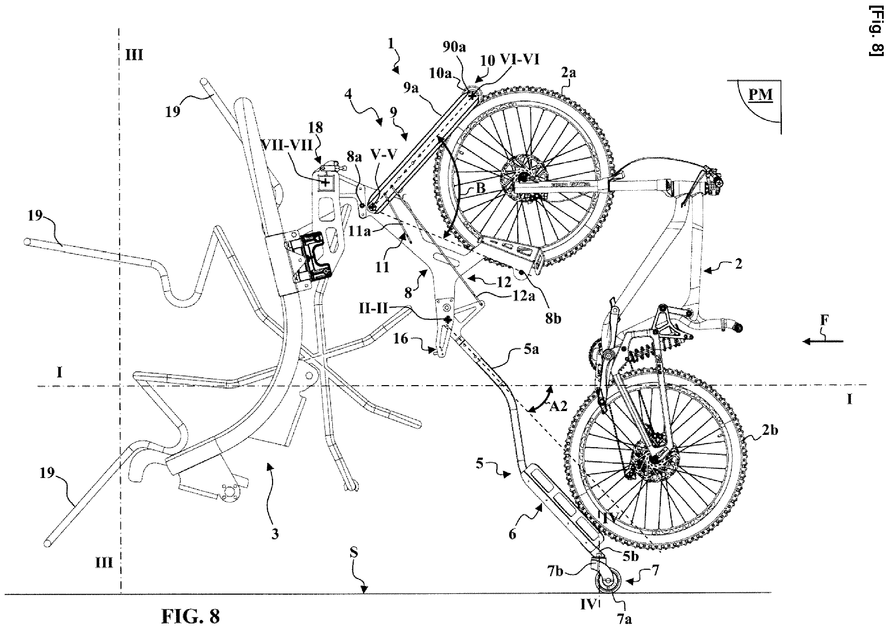

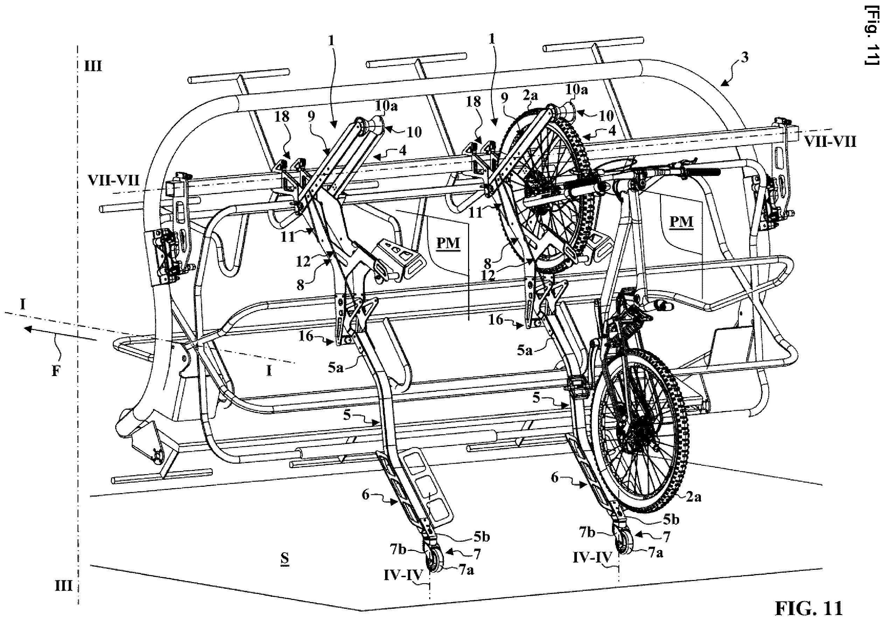

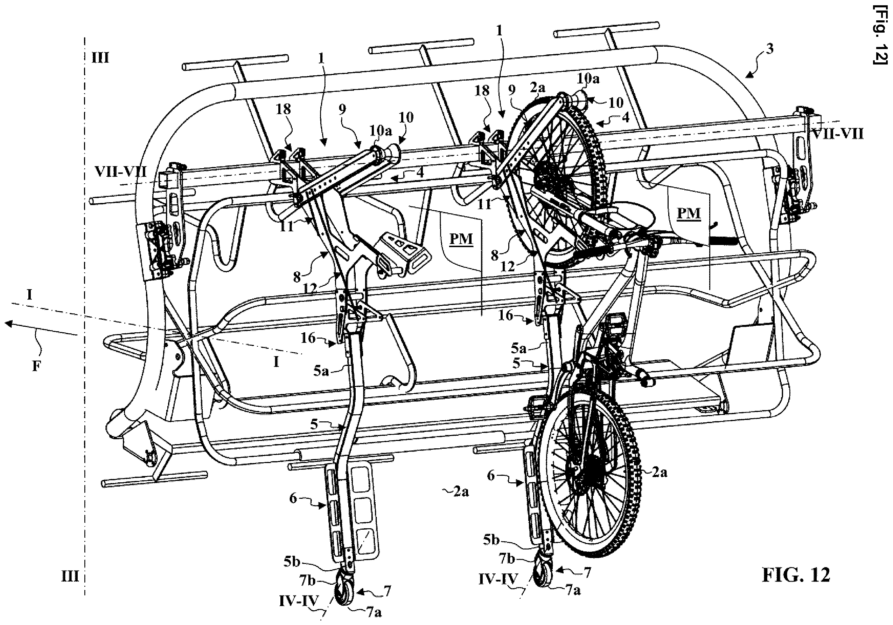

Ce dispositif de support 1 est destiné à recevoir et maintenir un cycle 2 à deux roues 2a (première roue) et 2b (deuxième roue), disposé à l'arrière et/ou sur le côté d'un véhicule de remontée mécanique 3, ledit véhicule de remontée mécanique 3 étant destiné à être déplacé selon une direction longitudinale I-I (figures 7 à 12) et dans le sens illustré par la flèche F.

Le véhicule de remontée mécanique 3 se développe en largeur selon une direction transversale VII-VII par rapport à la direction longitudinale I-I.

Le dispositif de support 1 comporte des moyens de solidarisation 18 conformés pour fixer le dispositif de support 1 derrière le véhicule de remontée mécanique 3 (figures 7 à 12) par rapport au sens de progression illustré par la flèche F.

Comme il est plus particulièrement visible sur les figures 1 à 5, le dispositif de support 1 comprend un support supérieur 4 conformé pour recevoir et retenir la première roue 2a dudit cycle à deux roues 2 orientée dans un plan de maintien PM sensiblement vertical et contenant ladite direction longitudinale I-I (le plan de maintien PM est également sensiblement perpendiculaire à la direction transversale VII-VII).

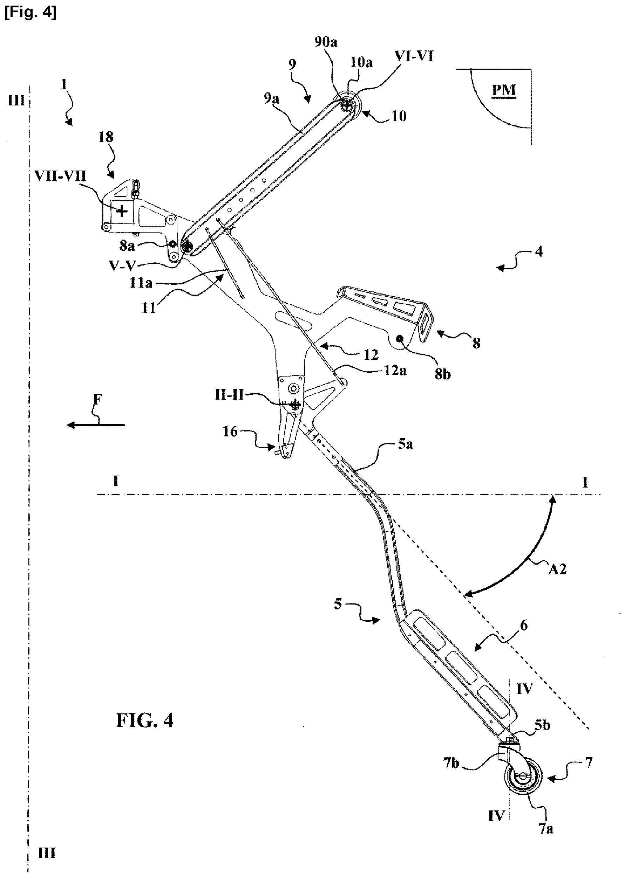

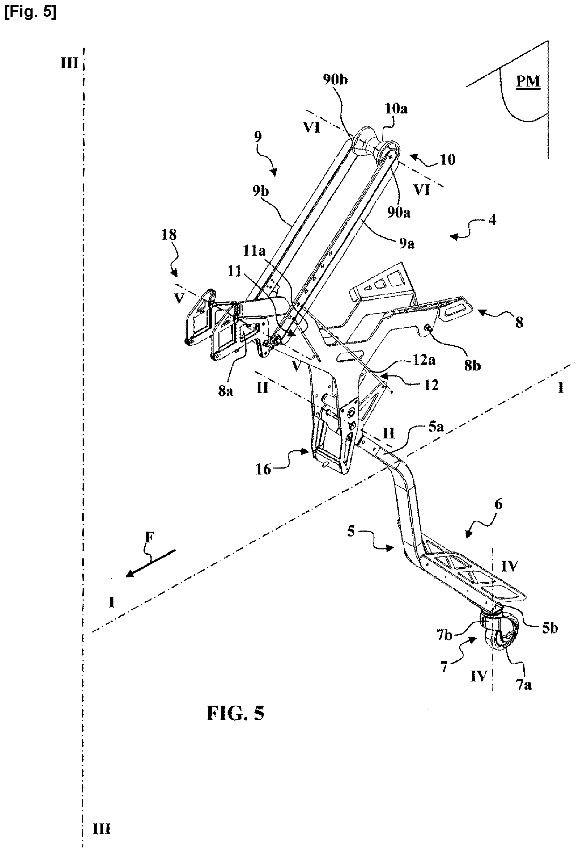

Le dispositif de support 1 comporte en outre :
- un support inférieur 5, allongé entre un tronçon d'extrémité proximale 5a et un tronçon d'extrémité distale 5b, et articulé selon son tronçon d'extrémité proximale 5a à pivotement dans ledit plan de maintien PM entre :
   a. une position de transport (figures 1 à 3), dans laquelle le support inférieur 5 forme avec la direction longitudinale I-I un premier angle A1 postérieur aigu,
   b. une position de chargement (figures 4 et 5), dans laquelle le support inférieur 5 forme avec la direction longitudinale I-I un deuxième angle A2 postérieur aigu, le deuxième angle A2 étant inférieur au premier angle A1,
- un réceptacle intermédiaire 6, agencé sur ledit support inférieur 5 entre le tronçon d'extrémité proximale 5a et le tronçon d'extrémité distale 5b, et conformé pour recevoir en appui la deuxième roue 2b dudit cycle à deux roues 2,
- des moyens de roulement 7, agencés sur le tronçon d'extrémité distale 5b du support inférieur 5, et conformés pour rouler sur une surface telle que le sol S (figures 7 à 9 et 11).

De façon plus précise, le support inférieur 5 est ici articulé selon son tronçon d'extrémité proximale 5a au support supérieur 4, à pivotement autour d'une direction II-II perpendiculaire au plan de maintien PM. Lors de l'utilisation sur le véhicule de remontée mécanique 3, le support supérieur 4 est destiné à être placé en une position plus élevée que le support inférieur 5.

Des premiers moyens de butée 16 s'opposent à la rotation du support inférieur 5 vers le bas au-delà d'une orientation oblique limite prédéterminée (illustrée sur les figures 1 à 3). Dans cette orientation oblique limite prédéterminée, la deuxième roue 2b est en arrière de la première roue 2a selon la direction longitudinale I-I (le sens avant étant celui défini par la flèche F). Le cycle à deux roues 2 est ainsi maintenu en permanence sur le dispositif de support 1 selon une pente P repérée par le troisième angle A3 sur la figure 1. Cette pente P permet de maintenir en appui la deuxième roue 2b en permanence contre le réceptacle intermédiaire 6 par le seul effet de la gravité (qui s'exerce ici selon une direction verticale III-III).

Par ailleurs, l'orientation oblique limite prédéterminée permet un fonctionnement du garde-corps 19 du véhicule de remontée mécanique 3 sans interférence avec le dispositif de support 1. Cette absence d'interférence est montrée sur les figures 7 à 12 sur lesquelles le garde-corps 19 est illustré dans trois positions (position fermée, position ouverte, et position intermédiaire entre les positions ouverte et fermée) : quelle que soit sa position, le garde-corps 19 ne vient jamais en collision avec le dispositif de support 1 entre ses positions ouverte et fermée.

Les moyens de roulement 7 sont conformés pour rouler dans toutes directions sur un plan. Pour ce faire, les moyens de roulement 7 comportent ici une roulette 7a portée par une monture 7b librement pivotante autour d'un axe de pivotement IV-IV.

Le réceptacle intermédiaire 6 peut être plan, le frottement du pneu sur le réceptacle intermédiaire 6 pouvant suffire à maintenir la deuxième roue 2b sensiblement dans le plan de maintien PM. Une éventuelle texturation du réceptacle intermédiaire 6 plan peut contribuer au maintien en augmentant le frottement avec le pneu de la deuxième roue 2b.

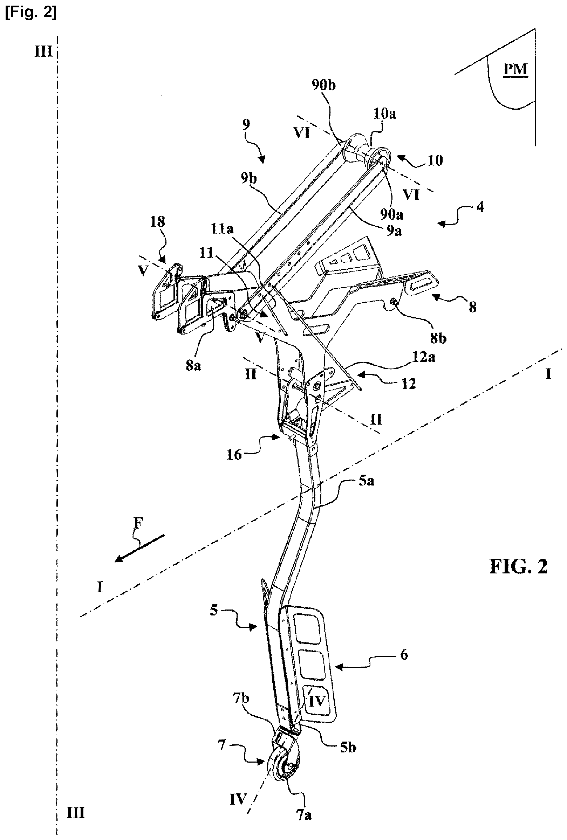

Pour encore mieux maintenir la deuxième roue 2b dans le plan de maintien PM, le réceptacle intermédiaire 6 présente ici une section transversale, par rapport audit plan de maintien PM, sensiblement en forme de U ou de vé (figures 2 et 5).

Le support supérieur 4 comporte un élément inférieur de maintien 8 destiné à recevoir en appui vertical ladite première roue 2a. En l'espèce, l'élément inférieur de maintien 8 reçoit la première roue 2a en appui vertical contre deux tiges transversales 8a et 8b orientées de façon sensiblement perpendiculaire au plan de maintien PM.

Dans le mode de réalisation illustré sur les figures, le support supérieur 4 comporte en outre un élément supérieur de maintien 9 destiné à venir en appui vertical depuis le haut sur ladite première roue 2a.

L'élément supérieur de maintien 9 comporte deux bras latéraux 9a et 9b espacés l'un à l'écart de l'autre de part et d'autre dudit plan de maintien PM de façon à pouvoir recevoir entre eux une partie de la première roue 2a. Les bras latéraux 9a et 9b comportent chacun une extrémité libre 90a et 90b. Les extrémités libres 90a et 90b des bras latéraux 9a et 9b sont reliées entre elles par des moyens de liaison 10 destinés à venir en appui vertical depuis le haut sur la première roue 2a.

Les moyens de liaison 10 comportent ici un rouleau 10a (en forme de diabolo avec deux tronçons tronconiques opposés par leurs sommets) disposé à pivotement autour d'un axe transversal VI-VI sensiblement perpendiculaire audit plan de maintien PM.

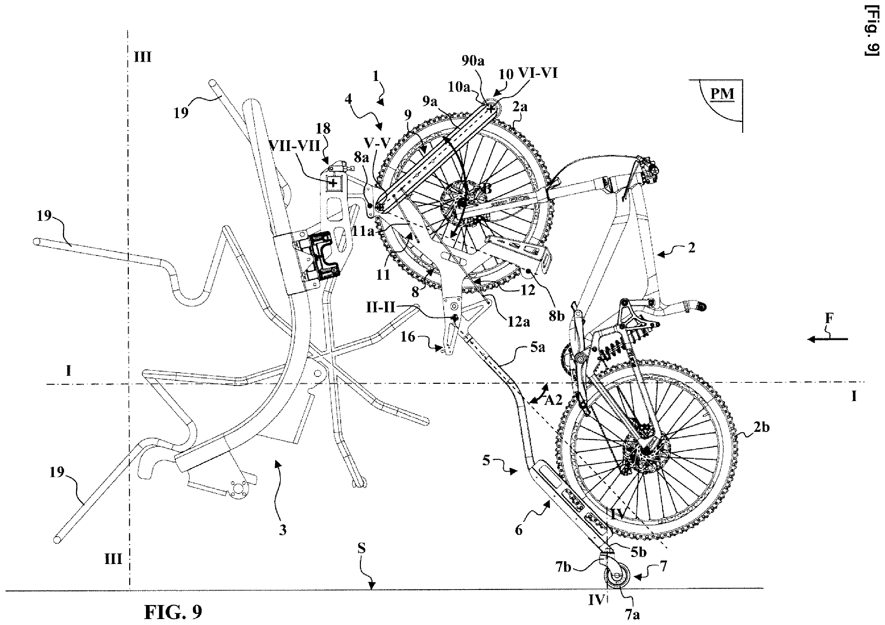

L'élément supérieur de maintien 9 est articulé à pivotement dans ledit plan de maintien PM (autour d'une direction V-V) par rapport à l'élément inférieur de maintien 8, entre :
- au moins une position d'ouverture, dans laquelle la première roue 2a peut pénétrer entre l'élément supérieur de maintien 9 et l'élément inférieur de maintien 8 par un mouvement d'introduction effectué vers l'avant dans ledit plan de maintien PM,
- au moins une position de fermeture (illustrée sur la figure 9), dans laquelle l'élément supérieur de maintien 9 et l'élément inférieur de maintien 8 s'opposent à une extraction de la première roue 2a par un mouvement d'extraction effectué vers l'arrière (sens opposé à celui déterminé par la flèche F) dans ledit plan de maintien PM.

L'élément supérieur de maintien 9 forme avec l'élément inférieur de maintien 8 un angle B définissant le degré d'ouverture du support supérieur 4. L'angle B est compris d'une part entre la droite passant par la direction V-V et par l'axe transversal VI-VI, et d'autre part entre la droite passant par les deux tiges transversales 8a et 8b.

En pratique, l'élément supérieur de maintien 9 est en position d'ouverture lorsque le rouleau 10a des moyens de liaison 10 se trouve à l'écart de la tige 8b de l'élément inférieur de maintien 8 selon une distance égale au diamètre extérieur de la première roue 2a.

Des premiers moyens de rappel élastiques 11, disposés entre l'élément supérieur de maintien 9 et l'élément inférieur de maintien 8, rappellent en permanence l'élément supérieur de maintien 9 et l'élément inférieur de maintien 8 vers leur position de fermeture.

Ici, l'élément supérieur de maintien 9 est en outre relié au support inférieur 5 par des deuxièmes moyens de rappel élastiques 12, tendant à faire pivoter l'élément supérieur de maintien 9 vers sa position de fermeture. Les deuxièmes moyens de rappel élastiques 12 sont agencés de telle sorte qu'un pivotement du support inférieur 5 vers sa position de transport (figures 1 à 3) provoque un allongement des deuxièmes moyens de rappel élastiques 12 quelle que soit la position de l'élément supérieur de maintien 9, et augmente la sollicitation de l'élément supérieur de maintien 9 vers sa position de fermeture. Cet allongement est perceptible en comparant les figures 1 et 4 notamment.

Sur les figures 1 à 5 et 7 à 12, les premiers moyens de rappel élastiques 11 et les deuxièmes moyens de rappel élastiques 12 comportent respectivement un sandow 11a ou 12a. On pourrait toutefois avoir recours en alternative à des ressorts hélicoïdaux.

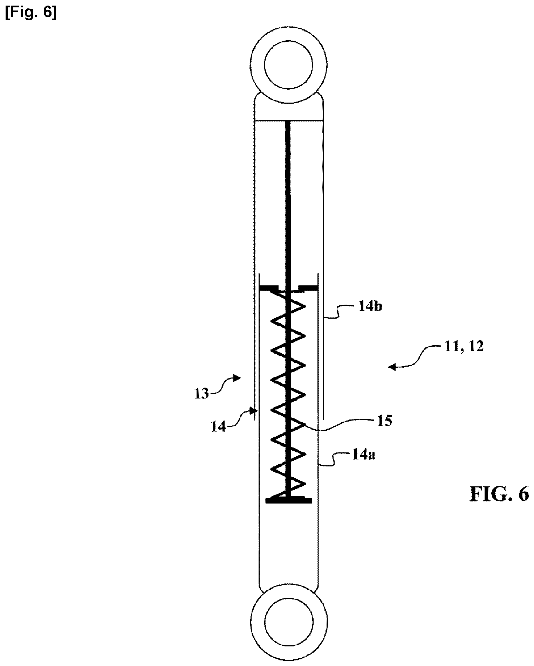

Dans une autre alternative illustrée sur la figure 6, on peut prévoir que :
- les premiers moyens de rappel élastiques 11 et/ou deuxièmes moyens de rappel élastiques 12 comportent une tige de connexion 13 comportant un corps 14 dont la longueur peut varier entre une première longueur et une deuxième longueur, la deuxième longueur étant supérieure à la première longueur,
- le corps 14 de la tige de connexion 13 comporte un premier tronçon de corps 14a et un deuxième tronçon de corps 14b agencés de façon télescopique,
- un ressort 15 exerce en permanence un effort tendant à ramener le corps 14 de la tige de connexion 13 à sa première longueur (plus courte).

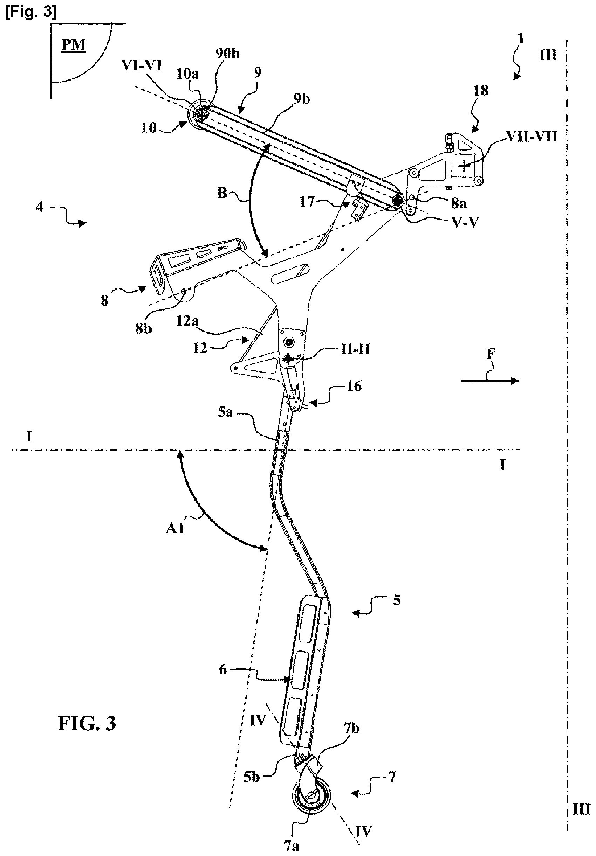

On voit plus spécifiquement sur la figure 3 que le dispositif de support 1 comporte des deuxièmes moyens de butée 17 s'opposant à un pivotement de l'élément supérieur de maintien 9 vers l'élément inférieur de maintien 8 au-delà d'une position prédéterminée d'attente qui est illustrée sur les figures 1 à 3.

En position d'attente, l'élément supérieur de maintien 9 forme avec les tiges 8a et 8b de l'élément inférieur de maintien 8 le plus petit angle B. Ce plus petit angle B est choisi de façon à procurer un écart entre l'élément supérieur de maintien 9 et l'élément inférieur de maintien 8 qui est suffisamment grand pour qu'un utilisateur puisse introduire facilement la première roue 2a du cycle 2 (la première roue 2a repoussant alors l'élément supérieur de maintien 9 vers le haut), et qui est suffisamment petit pour assurer une retenue satisfaisante des premières roues 2a de cycles 2 ayant un diamètre relativement petit.

Le fonctionnement du dispositif de support 1 va désormais être explicité plus en détails au moyen des figures 7 à 12 qui illustrent des étapes successives se déroulant en gare de départ d'une remontée mécanique de type télésiège.

Lors d'une première étape illustrée sur la figure 7, le dispositif de support 1 se trouve en position de chargement par le fait que le support inférieur 5 est en appui roulant sur le sol S par l'intermédiaire des moyens de roulement 7.

Pour charger un cycle 2, un opérateur oriente ledit cycle 2 dans le plan de maintien PM en soulevant sa première roue (avant) 2a et en le maintenant posé sur le sol S selon sa deuxième roue (arrière) 2b. L'opérateur déplace ensuite le cycle 2 vers le dispositif de support 1 par un mouvement relatif de déplacement vers l'avant (c'est-à-dire selon le sens défini par la flèche F) par rapport au véhicule de remontée mécanique 3 (ici un siège de télésiège).

La roue avant (première roue) 2a vient tout d'abord en appui sur la tige transversale 8b.

L'opérateur poursuit sa poussée pour déplacer le cycle 2 vers le dispositif de support 1 par un mouvement relatif de déplacement du cycle 2 vers l'avant (c'est-à-dire selon le sens défini par la flèche F) par rapport au véhicule de remontée mécanique 3 : la première roue (avant) 2a passe au-dessus de la tige transversale 8b.

Le passage au-dessus de la tige 8b provoque un décollement de la deuxième roue (arrière) 2b à l'écart du sol S, et la deuxième roue (arrière) 2b vient s'engager dans le réceptacle intermédiaire 6 du support inférieur 5.

L'opérateur poursuit sa poussée jusqu'à amener la première roue (avant) 2a en appui contre la tige transversale 8a pour achever de faire pénétrer la première roue (avant) 2a dans le support supérieur 4.

Pendant l'introduction de la première roue (avant) 2a dans le support supérieur 4, il se produit tout d'abord un mouvement d'ouverture du support supérieur 4 suivi d'un mouvement de fermeture du support supérieur 4.

Lors du mouvement d'ouverture du support supérieur 4, l'élément supérieur de maintien 9 est déplacé par la première roue 2a depuis sa position d'attente (figure 7), dans laquelle la distance entre le rouleau 10a et la tige transversale 8b est inférieure au diamètre extérieur de la première roue (avant) 2a (l'angle B est alors minimal), vers une position d'ouverture, dans laquelle la première roue (avant) 2a peut pénétrer entre l'élément supérieur de maintien 9 et l'élément inférieur de maintien 8 (la distance entre le rouleau 10a et la tige transversale 8b est alors sensiblement égale au diamètre extérieur de la première roue (avant) 2a, et l'angle B est alors maximal). Le mouvement d'ouverture du support supérieur 4 est provoqué par la première roue (avant) 2a qui repousse l'élément supérieur de maintien 9 à l'écart de l'élément inférieur de maintien 8 à l'encontre des premiers moyens de rappel élastiques 11 (mais aussi à l'encontre des deuxièmes moyens de rappel élastiques 12).

Lors du mouvement de fermeture du support supérieur 4, l'élément supérieur de maintien 9 est déplacé depuis sa position d'ouverture vers une position de fermeture (figure 9) dans laquelle l'élément supérieur de maintien 9 et l'élément inférieur de maintien 8 s'opposent à une extraction de la première roue 2a par un mouvement d'extraction effectué vers l'arrière dans ledit plan de maintien PM (dans un sens opposé à celui déterminé par la flèche F). Cette opposition résulte de la distance entre le rouleau 10a et la tige transversale 8b, qui est inférieure au diamètre extérieur de la première roue (avant) 2a. En position de fermeture, l'angle B est ici choisi intermédiaire entre l'angle B (minimal) de la position d'attente et inférieur à l'angle B (maximal) de la position d'ouverture. Le mouvement de fermeture du support supérieur 4 est provoqué par les premiers moyens de rappel élastiques 11 qui rappellent en permanence l'élément supérieur de maintien 9 en pivotement vers l'élément inférieur de maintien 8. Les deuxièmes moyens de rappel élastiques 12 participent également à ce rappel en pivotement de l'élément supérieur de maintien 9.

En position de fermeture, les premiers moyens de rappel élastiques 11 (ainsi que les deuxièmes moyens de rappel élastiques 12) exercent une première force verticale de maintien sur la première roue (avant) 2a qui permet de limiter efficacement les risques d'échappement intempestif de la première roue (avant) 2a hors du support supérieur 4 pendant la progression du véhicule de remontée mécanique 3 en gare.

Une fois le cycle 2 parvenu dans la position de la figure 9, celui-ci est maintenu orienté (par l'intermédiaire de ses roues 2a et 2b) dans un plan de maintien PM sensiblement vertical et contenant ladite direction longitudinale I-I.

Les moyens de roulement 7 soutiennent le support inférieur 5 et permettent à celui-ci de se déplacer au-dessus du sol S (qui est ici plan) dans toutes les directions parallèles audit plan du sol S par pivotement de la roulette 7a autour de l'axe de pivotement IV-IV. Si le sol S n'est pas rigoureusement plan, la roulette 7a reste au contact du sol 7 par pivotement du support inférieur 5 autour de la direction II-II perpendiculaire au plan de maintien PM. Il n'est ainsi plus induit de contrainte sur le cycle 2 par le mouvement relatif du véhicule de remontée mécanique 3 par rapport au sol S.

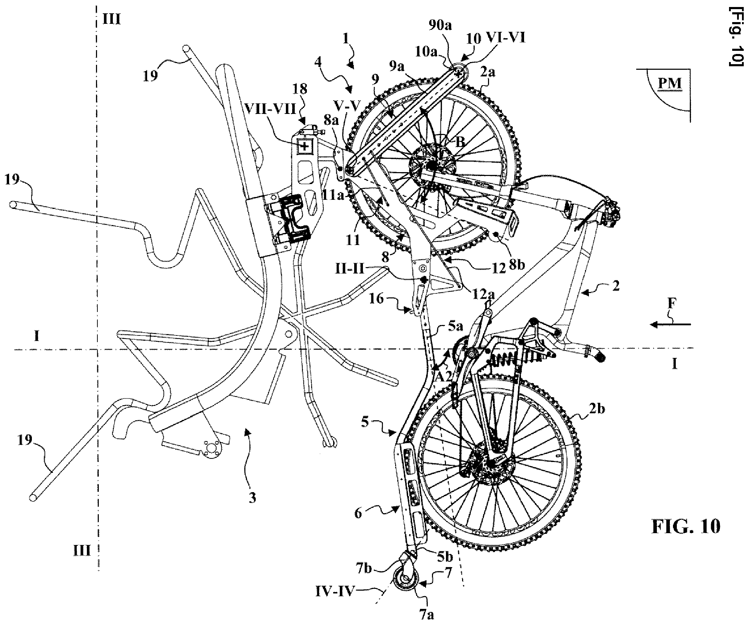

Lorsque le véhicule de remontée mécanique 3 quitte la gare de départ de la remontée mécanique, son écart E par rapport au sol S augmente : le support inférieur 5 ne repose alors plus sur le sol S et peut ainsi pivoter vers sa position de transport (illustrée sur la figure 10) par le simple effet de la gravité. Le support inférieur 5 est alors maintenu dans son orientation oblique limite prédéterminée par les premiers moyens de butée 16.

Les premiers moyens de butée 16 s'opposent à la rotation du support inférieur 5 vers le bas au-delà de l'orientation oblique limite prédéterminée dans laquelle la deuxième roue 2b est en arrière de la première roue 2a selon un écart E (selon la direction longitudinale I-I). La deuxième roue (arrière) 2b est ainsi maintenue en appui contre le support inférieur 5 et dans le réceptacle 6 par le simple effet de la gravité.

Le basculement du support inférieur 5 depuis sa position de chargement vers sa position de transport provoque un allongement des deuxièmes moyens de rappel élastiques 12, ce qui a pour effet de générer une deuxième force verticale de maintien sur la première roue (avant) 2a qui est supérieure à la première force verticale de maintien. La première roue (avant) 2a est ainsi encore mieux retenue captive entre les éléments inférieur 8 et supérieur 9 de maintien lorsque le véhicule de remontée mécanique 3 se trouve à plus grande hauteur vis-à-vis du sol S.

Lorsque le véhicule de remontée mécanique 3 pénètre en gare d'arrivée, le support inférieur 5 vient au contact du sol S selon les moyens de roulement 7 : le support inférieur 5 bascule alors depuis sa position de transport vers sa position de chargement (qui devient dans ce cas une position de déchargement) telle qu'illustrée sur la figure 9. A noter qu'en gare d'arrivée le support inférieur 5 peut être pivoté autour de la direction V-V selon un angle plus ou moins grand que l'angle que prend le support inférieur 5 en gare de départ, en fonction de l'écart relatif en hauteur entre le véhicule de remontée mécanique 3 et le sol S.

Là encore, les moyens de roulement 7 permettent de suivre le mouvement induit entre le dispositif de support 1 et le sol S par le trajet du véhicule de remontée mécanique 3 (qui peut être au moins en partie circulaire) : il ne se présente plus de problème de dérapage latéral du cycle 2 sur le sol S puisqu'il est porté selon sa deuxième roue 2b par le support inférieur 5 dont la roulette 7a (parfois appelée « roulette folle ») roule sur le sol en s'orientant librement autour de son axe de pivotement IV-IV (sensiblement vertical).

Partant de la position illustrée sur la figure 9, un opérateur présent en gare d'arrivée peut extraire le cycle 2 par un mouvement relatif vers l'arrière du cycle 2 par rapport au véhicule de remontée mécanique 3. Ce faisant, il provoque l'échappement de la première roue (avant) 2a hors du support supérieur 4.

Il est à noter qu'à ce moment-là, les deuxièmes moyens de rappel élastiques 12 sont moins tendus qu'en position de transport : la première roue (avant) 2a est sensiblement retenue captive par la première force verticale de maintien qui est plus faible que la deuxième force verticale de maintien. L'opérateur peut ainsi extraire le cycle 2 hors du support supérieur 4 de façon relativement aisée.

Lors de l'extraction de la première roue (avant) 2a hors du support supérieur 4, l'élément supérieur de maintien 9 est repoussé en pivotement par la première roue 2a dans un premier temps à l'écart de l'élément inférieur de maintien 8 depuis sa position de fermeture (angle B intermédiaire) vers sa position d'ouverture (angle B maximal). Puis, dans un deuxième temps, après extraction de la première roue 2a, l'élément supérieur de maintien 9 pivote en retour vers l'élément inférieur de maintien 8 depuis sa position d'ouverture vers sa position d'attente (angle B minimal) en étant rappelé par les premiers moyens de rappel élastiques 11.

Bien que le dispositif de support 1 selon la présente invention ait été décrit précédemment en étant fixé derrière le véhicule de remontée mécanique 3, il est possible que le dispositif de support 1 soit fixé sur le côté du véhicule de remontée mécanique 3.

Bien que le dispositif de support 1 selon la présente invention ait été décrit précédemment dans le cadre d'une utilisation sur un véhicule de remontée mécanique 3 de type siège, le véhicule de remontée mécanique 3 peut être une cabine.

La présente invention n'est pas limitée aux modes de réalisation qui ont été explicitement décrits, mais elle en inclut les diverses variantes et généralisations contenues dans la portée des revendications ci-après.

## Revendications

1. Dispositif de support (1) pour recevoir et maintenir un cycle (2) à deux roues (2a, 2b) à l'arrière ou sur le côté d'un véhicule de remontée mécanique (3) destiné à être déplacé selon une direction longitudinale (I-I), ledit dispositif de support (1) comprenant un support supérieur (4) conformé pour recevoir et retenir une première roue (2a) dudit cycle (2) à deux roues (2a, 2b) orientée dans un plan de maintien (PM) sensiblement vertical et contenant ladite direction longitudinale (I-I), ledit dispositif de support (1) comportant :
- un support inférieur (5), allongé entre un tronçon d'extrémité proximale (5a) et un tronçon d'extrémité distale (5b),
- un réceptacle intermédiaire (6), agencé sur ledit support inférieur (5) entre le tronçon d'extrémité proximale (5a) et le tronçon d'extrémité distale (5b), et conformé pour recevoir en appui une deuxième roue (2b) dudit cycle (2) à deux roues (2a, 2b),
**caractérisé en ce que** :
- le support inférieur (5) est articulé selon son tronçon d'extrémité proximale (5a) à pivotement dans ledit plan de maintien (PM) entre :
a. une position de transport, dans laquelle le support inférieur (5) forme un premier angle (A1) avec la direction longitudinale (I-I),
b. une position de chargement, dans laquelle le support inférieur (5) forme un deuxième angle (A2) avec la direction longitudinale (I-I), le deuxième angle (A2) étant inférieur au premier angle (A1),
- des moyens de roulement (7) sont agencés sur le tronçon d'extrémité distale (5b) du support inférieur (5), et sont conformés pour rouler sur une surface telle que le sol (S).

2. Dispositif de support (1) selon la revendication 1, **caractérisé en ce que** le support inférieur (5) est articulé selon son tronçon d'extrémité proximale (5a) au support supérieur (4).

3. Dispositif de support (1) selon l'une des revendications 1 ou 2, **caractérisé en ce que** des premiers moyens de butée (16) s'opposent à la rotation du support inférieur (5) vers le bas au-delà d'une orientation oblique limite prédéterminée dans laquelle la deuxième roue (2b) est en arrière de la première roue (2a).

4. Dispositif de support (1) selon l'une quelconque des revendications 1 à 3, **caractérisé en ce que** les moyens de roulement (7) sont conformés pour rouler dans toutes directions sur un plan.

5. Dispositif de support (1) selon la revendication 4, **caractérisé en ce que** les moyens de roulement (7) comportent une roulette (7a) portée par une monture (7b) librement pivotante autour d'un axe de pivotement (IV-IV).

6. Dispositif de support (1) selon l'une quelconque des revendications 1 à 5, **caractérisé en ce que** le réceptacle intermédiaire (6) est conformé pour maintenir ladite deuxième roue (2b) dans ledit plan de maintien (PM), et de préférence présente une section transversale, par rapport audit plan de maintien (PM), sensiblement en forme de U ou de vé.

7. Dispositif de support (1) selon l'une quelconque des revendications 1 à 6, **caractérisé en ce que** le support supérieur (4) comporte un élément inférieur de maintien (8) destiné à recevoir en appui vertical ladite première roue (2a).

8. Dispositif de support (1) selon la revendication 7, **caractérisé en ce que** :
- le support supérieur (4) comporte un élément supérieur de maintien (9) destiné à venir en appui vertical sur ladite première roue (2a),
- l'élément supérieur de maintien (9) est articulé à pivotement dans ledit plan de maintien (PM) par rapport à l'élément inférieur de maintien (8), entre :
a. au moins une position d'ouverture, dans laquelle la première roue (2a) peut pénétrer entre l'élément supérieur de maintien (9) et l'élément inférieur de maintien (8) par un mouvement d'introduction effectué vers l'avant dans ledit plan de maintien (PM),
b. au moins une position de fermeture, dans laquelle l'élément supérieur de maintien (9) et l'élément inférieur de maintien (8) s'opposent à une extraction de la première roue (2a) par un mouvement d'extraction effectué vers l'arrière dans ledit plan de maintien (PM).

9. Dispositif de support (1) selon la revendication 8, **caractérisé en ce que** des premiers moyens de rappel élastiques (11), disposés entre l'élément supérieur de maintien (9) et l'élément inférieur de maintien (8), rappellent en permanence l'élément supérieur de maintien (9) et l'élément inférieur de maintien (8) vers leur position de fermeture.

10. Dispositif de support (1) selon l'une des revendications 8 ou 9, **caractérisé en ce que** :
- l'élément supérieur de maintien (9) est relié au support inférieur (5) par des deuxièmes moyens de rappel élastiques (12),
- un pivotement du support inférieur (5) vers sa position de transport provoque un allongement des deuxièmes moyens de rappel élastiques (12) quelle que soit la position de l'élément supérieur de maintien (9).

11. Dispositif de support (1) selon l'une des revendications 9 ou 10, **caractérisé en ce que** les premiers moyens de rappel élastiques (11) et/ou les deuxièmes moyens de rappel élastiques (12) comportent un ressort ou un sandow (11a, 12a).

12. Dispositif de support (1) selon l'une des revendications 9 ou 10, **caractérisé en ce que** :
- les premiers moyens de rappel élastiques (11) et/ou deuxièmes moyens de rappel élastiques (12) comportent une tige de connexion (13) comportant un corps (14) dont la longueur peut varier entre une première longueur et une deuxième longueur, la deuxième longueur étant supérieure à la première longueur,
- le corps (14) de la tige de connexion (13) comporte un premier tronçon de corps (14a) et un deuxième tronçon de corps (14b) agencés de façon télescopique,
- un ressort (15) exerce en permanence un effort tendant à ramener le corps (14) de la tige de connexion (13) à sa première longueur.

13. Dispositif de support (1) selon l'une quelconque des revendications 8 à 12, **caractérisé en ce que** le dispositif de support (1) comporte des deuxièmes moyens de butée (17) s'opposant à un pivotement de l'élément supérieur de maintien (9) vers l'élément inférieur de maintien (8) au-delà d'une position prédéterminée d'attente.

14. Dispositif de support (1) selon l'une quelconque des revendications 8 à 13, **caractérisé en ce que** :
- l'élément supérieur de maintien (9) comporte deux bras latéraux (9a, 9b) espacés l'un à l'écart de l'autre de part et d'autre dudit plan de maintien (PM) de façon à recevoir entre eux une partie de la première roue (2a), lesdits bras latéraux (9a, 9b) comportant chacun une extrémité libre (90a, 90b),
- les extrémités libres (90a, 90b) des bras latéraux (9a, 9b) sont reliées entre elles par des moyens de liaison (10) destinés à venir en appui vertical sur la première roue (2a).

15. Dispositif de support (1) selon la revendication 14, **caractérisé en ce que** les moyens de liaison (10) comportent un rouleau (10a) disposé à pivotement autour d'un axe transversal (VI-VI) sensiblement perpendiculaire audit plan de maintien (PM).

16. Dispositif de support (1) selon l'une quelconque des revendications 1 à 15, **caractérisé en ce qu'**il comporte des moyens de solidarisation (18) conformés pour fixer le dispositif de support (1) derrière un véhicule de remontée mécanique (3) se développant en largeur selon une direction transversale (VII-VII), ledit véhicule de remontée mécanique (3) étant destiné à être déplacé selon la direction longitudinale (I-I).

17. Véhicule de remontée mécanique (3) se développant en largeur selon une direction transversale (VII-VII) et destiné à être déplacé selon une direction longitudinale (I-I), comportant un dispositif de support (1) selon l'une quelconque des revendications 1 à 16, ledit dispositif de support (1) étant fixé derrière le véhicule de remontée mécanique (3) ou sur le côté du véhicule de remontée mécanique (3).

18. Remontée mécanique comportant au moins un véhicule de remontée mécanique (3) selon la revendication 17, ledit véhicule de remontée mécanique (3) étant de type siège ou cabine.
